# EUROPEAN PATENT SPECIFICATION

(11) **EP 2 839 746 B1**
(45) Date of publication and mention of the grant of the patent: **22.03.2017**
(21) Application number: 13825860.3
(22) Date of filing: 25.07.2013
(51) Int. Cl.: A21D 2/36, A21D 10/00, A21D 13/00, A21D 2/18

(54) **HARDENING INHIBITOR FOR BAKED GOOD, METHOD FOR INHIBITING HARDENING OF BAKED GOOD, METHOD FOR PRODUCING BAKED GOOD, MIX FLOUR FOR BAKED GOOD, AND BAKED GOOD**
HÄRTEINHIBITOR FÜR BACKWAREN, VERFAHREN ZUR HEMMUNG DER HÄRTUNG VON BACKWAREN, VERFAHREN ZUR HERSTELLUNG VON BACKWAREN, MISCHMEHL FÜR BACKWAREN UND BACKWAREN
INHIBITEUR DE DURCISSEMENT POUR PRODUIT DE BOULANGERIE, PROCÉDÉ D'INHIBITION DU DURCISSEMENT D'UN PRODUIT DE BOULANGERIE, PROCÉDÉ DE PRODUCTION D'UN PRODUIT DE BOULANGERIE, MÉLANGE DE FARINES POUR PRODUIT DE BOULANGERIE ET PRODUIT DE BOULANGERIE

(30) Priority: 31.07.2012 JP 2012170557
(43) Date of publication of application: 25.02.2015
(73) Proprietor: Showa Sangyo Co., Ltd., Tokyo 101-8521 (JP)
(72) Inventor: YAMADA, Koji, Tokyo 101-8521 (JP); AKEBOSHI, Gen, Tokyo 101-8521 (JP)
(74) Representative: Godemeyer Blum Lenze Patentanwälte Partnerschaft mbB - werkpatent
(86) International application number: PCT/JP2013/070138
(87) International publication number: WO 2014/021181

(56) References cited:
- WO-A2-98/34487
- JP-A- H0 646 767
- JP-A- 2001 321 085
- JP-A- 2011 229 478
- JP-A- 2012 090 581
- JP-A- 2012 095 535
- JP-A- 2012 185 038
- DATABASE BIOSIS [Online] BIOSCIENCES INFORMATION SERVICE, PHILADELPHIA, PA, US; July 2009 (2009-07), ARAKI ETSUKO ET AL: "Effects of Rice Flour Properties on Specific Loaf Volume of One-loaf Bread Made from Rice Flour with Wheat Vital Gluten", XP002737555, Database accession no. PREV200900582288 & FOOD SCIENCE AND TECHNOLOGY RESEARCH, vol. 15, no. 4, July 2009 (2009-07), pages 439-448, ISSN: 1344-6606
- WRITTEN ET AL. SEIPAN NO KAGAKU<I> SEIPAN PROCESS NO KAGAKU 30 October 1997, pages 195 - 197, XP008176577

## Description

### Technical Field

The present invention relates to a bread hardening preventing agent, bread hardening-preventing method, bread production method, premix flour for bread, and bread whose hardening is prevented.

### Background Art

While a bread is a soft and voluminous food product having an excellent texture immediately after produced, it undergoes hardening and its texture becomes poor along with the time after baking, exhibiting a rapid reduction in the product value. In such a circumstance, methods for preventing hardening of breads have been investigated intensively, and emulsifiers such as glycerol fatty acid ester and modified starches such as hydroxypropylated tapioca starch are employed for the purpose of preventing the hardening of the breads.

For example, Patent Document 1 describes that by producing a bread using a bread improver containing L-ascorbic acid and a highly hydrophilic sucrose fatty acid ester, the hardness of the bread is reduced. Patent Document 2 also proposes that by using a combination of a glycerol fatty acid ester and an organic acid and fatty acid ester of glycerol with oils, the time-dependent hardness of a baked bread can be prevented.

Patent Document 3 proposes a method for suppressing the deterioration of the quality of a bread after baking (e.g. time-dependent hardening to exhibit a dry and crumbly texture) by replacing a part of the flour employed as a main raw material by a modified starch and a vital gluten.

As discussed above, the emulsifiers and the modified starches are employed as hardening preventing agents for breads, however, a diverse consumers' demand in these days further requires a variety of hardening preventing agents for breads.

### Citation List

### Patent Literatures

[Patent Document 1] JP-B No. S56-042887
[Patent Document 2] JP-A No. H06-098666
[Patent Document 3] JP-A No. H03-087135

Further documents of the state of art refer to the following items:
The document Araki et al. (Effects of Rice Flour Properties on Specific Loaf Volume of One-loaf Bread Made from Rice Flour with Wheat Vital Gluten", Food Science and Technology Research, vol. 15, no. 4, pages 439 to 448, 2009) discloses studies on the relationship between the specific loaf volume and damaged starch content as shown in Fig. 2. The document discloses that a lower damaged starch content increases specific loaf volume and the specific loaf volume might decrease in bread made from flour with more damaged starch. The document also discloses that the dough formed from rice flour with a higher damaged starch content had a tendency to be harder than that from rice flour with a lower damaged starch content. Consequently, the document does not disclose a use of a rice flour with a higher damaged starch content for preventing bread hardening, but suggests that a rice flour with a higher damaged starch content has a tendency to harden bread.

The documents JP H06 46767 A and JP 2001 321085 A disclose rice flours having a damaged starch content of 20-70%. The rice flours described in these documents are not used for preparing bread but are used for making manju. Manju is a Japanese steamed bun with a red bean (azuki bean) paste filling. The disclosure of JP H06 46767 A relates to the production of non-glutinous rice powder. The non-glutinous rice powder is used for high-class Japanese sweets such as steamed filled dumplings for tops (joyo manju) and buckwheat-noodles steamed filled dumplings (soba manju), etc.. The document JP 2001 321085 A relates steamed filled dumplings for tops (joyo manju).

### Summary of Invention

### Technical Problem

In view of such a circumstance, the present invention provides a bread hardening preventing agent, a bread hardening-preventing method, a bread production method, and a premix flour for bread for the purpose of obtaining a bread whose hardening is prevented even at a time when the time has passed after production, and also provides a bread whose hardening is prevented.

### Solution to Problem

Accordingly, as a results of our intensive study to overcome the aforementioned problems, it was found unexpectedly that by using a rice flour having a higher damaged starch content for producing a bread, a bread whose hardening is prevented even at a time when the time has passed after production can be obtained, thereby establishing the present invention.

Thus the present invention provides the following:
(1) Use of an agent whose active ingredient is a rice flour whose damaged starch content is 15% by mass or more in an amount of 0.1 to 15 parts by mass based on 100 parts by mass of a wheat flour for preventing bread hardening.
(2) The use according to (1), wherein the active ingredient is a rice flour whose damaged starch content is more than 30% by mass.
(3) A bread hardening-preventing method which incorporates a rice flour whose damaged starch content is 15% by mass or more in an amount of 0.1 to 15 parts by mass based on 100 parts by mass of a wheat flour, for preventing bread hardening when producing bread.
(4) A bread production method which incorporates a rice flour whose damaged starch content is 15% by mass or more in an amount of 0.1 to 15 parts by mass based on 100 parts by mass of a wheat flour.
(5) A premix flour for bread containing 0.1 to 15 parts by mass of a rice flour whose damaged starch content is 15% by mass or more based on 100 parts by mass of a wheat flour.
(6) A bread in which a rice flour whose damaged starch content is 15% by mass or more is present in an amount of 0.1 to 15 parts by mass based on 100 parts by mass of a wheat flour.

### Advantageous Effects of Invention

According to the invention, a bread whose hardening is satisfactorily prevented even at a time when the time has passed after production can be provided.

### Description of Embodiments

The rice flour having a high damaged starch content which is used as an active ingredient and as a component, in the presently disclosed bread hardening preventing agent and premix flour for bread, respectively, is a rice flour whose damaged starch content is 15% by mass or more. As used herein, such a rice flour is referred to also as "damaged starch-rich rice flour".

Also, the aforementioned damaged starch-rich rice flour can be used in the presently disclosed bread hardening-preventing method, the presently disclosed bread production method, and bread.

A higher damaged starch content in the presently disclosed rice flour is more preferable because it allows for an excellent hardening-preventing effect. The presently disclosed rice flour has a damaged starch content preferably of 20% by mass or more, more preferably of 25% by mass or more, further preferably of 30% by mass or more, and still further preferably of 35% by mass or more, because such a rice flour is capable of satisfactorily preventing the hardening of the resultant bread.

Also, a rice flour having a presently disclosed damaged starch content preferably of 45% by mass or less is preferable because it allows the production cost of the presently disclosed rice flour to be reduced. Also, the presently disclosed rice flour whose damaged starch content is more than 30% by mass is excellent in terms of preventing the hardening of a bread. On the other hand, in terms of reducing the number of the treatment steps in producing a rice flour and reducing the production cost of the rice flour, a rice flour whose damaged starch content is 15% by mass or more and 30% by mass or less is desirable.

The term "damaged starch (referred to also as "DS") content" of the present disclosure means the amount of the damaged starch contained in the entire amount of the rice flour. Such a "damaged starch" means a starch whose starch particle has been damaged mechanically by the pressure or impact exerted when the rice is ground.

The term "damaged starch content" of the present disclosure can be measured according to AACC Method 76-31. Typically, the damaged starch contained in a sample is degraded exclusively using a fungal α-amylase into maltosaccharides and limit dextrin, which are degraded thereafter using amyloglucosidase into glucose, and then the glucose thus produced is quantified, thereby accomplishing the measurement. It is also possible to conduct the measurement using a commercially available kit (for example, Starch Damage Assay Kit manufactured by MegaZyme).

Also since the aforementioned rice flour, when having fine particles, can prevent the hardening of the resultant bread more effectively, a rice flour having fine particles is desirable. Such a rice flour having fine particles containing a certain amount of particles each having a particle diameter of 10 µm or less is preferable. Such a rice flour having a particle size distribution in which the particles each having a particle diameter of 10 µm or less is present in an amount of 10% by volume or more (preferably 15% by volume or more) is preferable. Also, such a rice flour having a particle size distribution in which the 90% cumulative distribution is 100 µm or less, preferably 90 µm or less, and more preferably 80 µm or less is preferable.

In a method for measuring a "particle diameter" and a "particle size distribution", "Laser diffraction type particle size distribution meter HELOS & RODOS" manufactured by Japan Laser Corp. is employed to conduct the measurement in a dry mode.

In conventional food production industries, especially in bread production industries, a rice flour is regarded as one of the substitutes for a wheat flour, and the development of technologies for rice flour incorporation or substitution is underway. Nevertheless, it has been considered that it is difficult to obtain a satisfactory bread when a rice flour is incorporated.

Typically, when a part of the wheat flour is replaced with a rice flour in producing a bread, it is difficult to allow the bread to be swollen, and the resultant bread has a reduced specific volume which leads to a lower quality. Therefore, it is difficult to increase the amount of the rice flour incorporated into a bread, and, in order to increase the amount of the rice flour to be incorporated without any deterioration of the bread quality, it is required to use various additives such as gluten, thickening polysaccharides, pregelatinized rice flour, and the like.

Nevertheless, in order to achieve a desired baking quality or processing suitability-improving effect by adding the additives such as gluten, thickening polysaccharides, pregelatinized rice flour, and the like, a detailed investigation of types and amounts of the additives is required and a sophisticated technology becomes necessary to obtain a bread of a satisfactory quality. Thus, it is difficult to obtain a bread of a high quality in a simple manner, and an accompanying increase in the production cost results in a high-price bread.

Especially when using a rice flour containing a large amount of a starch in a damaged state (damaged starch) as a substitute for a wheat flour, several problems, such as reduction in operability due to the onset of stickiness of the bread dough and reduction in the specific volume and deformation (caving) due to suppressed swelling of a bread, are known to be evident.

Thus, there are many problems to be solved in an attempt to use a rice flour in a bread, and, when taking the quality, state, or texture of the resultant bread into consideration, it is considered to be desirable, even when using a rice flour or when producing a rice flour bread, to use a rice flour having a low damaged starch content (for example, see Reference 1: Bulletin of NAGOYA BUNRI University, Vol.12, Abstract in page 31 to 38 and Figures 10 to 12).

Meanwhile, we investigated various materials for preventing hardening of various breads as shown in Examples described below, and it was discovered quite unexpectedly that by using a rice flour having a high damaged starch content in a bread, it is possible to obtain a bread whose hardening is prevented when compared with an ordinary bread. Also it was discovered that, when using a presently disclosed damaged starch-rich rice flour as an active ingredient for preventing hardening in producing a bread, it is possible to obtain an excellent bread whose hardening is prevented, flavor is not impaired, and texture is satisfactory even at a time when the time has passed after production. In addition, the bread thus produced exhibited no deformation (caving).

It is also considered generally that excessively fine cereal particles cause a problematically vigorous dusting during bread production. Nevertheless, we discovered that when the aforementioned damaged starch-rich rice flour whose particle diameter and particle size distribution are adjusted within a range of smaller sizes, it is possible to obtain an excellent bread whose hardening prevention is more excellent, flavor is not impaired, and texture is satisfactory even at a time when the time has passed after production.

Accordingly, the presently disclosed damaged starch-rich rice flour can be used for producing a bread hardening preventing agent for the purpose of obtaining a bread whose hardening is prevented. Also, the presently disclosed damaged starch-rich rice flour itself or a bread hardening preventing agent containing it can be used to provide a bread hardening-preventing method, a bread-intended dough and a method for producing it, a bread production method, and a premix flour for bread for the purpose of obtaining a bread whose hardening is prevented. Moreover, the presently disclosed damaged starch-rich rice flour itself, a formulation containing it, and a method using it make it possible to produce a bread whose hardening is satisfactorily prevented.

The "damaged starch-rich rice flour" employed in this disclosure is one obtained by grinding a rice into a powder so that the damaged starch content becomes high. Such a rice is desirably an uncooked rice.

The rice to be ground can be a nonglutinous rice and/or glutinous rice and/or low-amylose rice, and the types of the nonglutinous rice and glutinous rice and low-amylose rice are not limited particularly, and may be Japonica, Indica, and Javanica types. Among these, the nonglutinous rice is desirable because it prevents the bread hardening satisfactorily.

The rice before being ground is not limited particularly, and may for example be a polished rice, half-milled rice, brown rice, broken rice, and the like, two or more of which may be employed in combination.

The presently disclosed damaged starch-rich rice flour can be obtained by using a known grinding machine to grind the aforementioned rice into one having a desired damaged starch content. While the damaged starch-rich rice flour obtained by grinding the rice may be employed as it is in a bread, it is desirable that after grinding a suitable sieving or classification is conducted to adjust the particle diameter and the particle size of the rice flour. In such a case, the damaged starch content and the particle size of the rice flour may be measured by the aforementioned method for measuring the "damaged starch content" and the aforementioned method for measuring "particle diameter" and "particle size distribution".

While the aforementioned grinding machine may be any grinding machine employed ordinarily in producing a food product, those which may be exemplified in roll milling include a roll mill; those in air-flow type milling includes a jet-mill; those in impact grinding include a hammer mill, pin beater mill, turbo-mill, ball mill, beads mill, pestle, and stamp mill; those in attrition grinding include a millstone-containing attrition grinder and roll mill; those in shear pulverization include a cutter mill.

It is also possible to use a grinding machine combining several grinding methods (for example cyclone mill, flash mill, counter-current pulverization and the like). With any grinding machine, a dry mode is preferable since it allows the damaged starch content to be increased easily.

The particle size distribution of the aforementioned rice flour can be adjusted by flour-milling using one or more of known grinding methods such as a roll milling method, shear pulverization method, attrition grinding method, impact grinding method, air-flow type milling method, and the like.

Also it is possible to adjust the particle size distribution of the aforementioned rice flour by using a sieve having a mesh size smaller than that of a 100 mesh sieve, passing through which allows for a desired particle diameter or smaller.

The particle size of the aforementioned rice flour can be adjusted also by using several sieves having different mesh sizes. In such a case, a certain mass of a rice flour is subjected to sieves in the order of coarser mesh size and the incorporation ratio between the fraction remaining on each sieve and the fraction passing through all sieves is adjusted to obtain desired particle size.

For example, adjustment so that a particle having a particle diameter of 10 µm or less is contained in the rice flour at 10% by volume or more (preferably 15% by volume) can be conducted by the following method. The rice flour ground by the aforementioned grinding machine is sieved appropriately, and the particles passing through the sieve are collected, thereby increasing the particles of 10 µm or less to a level of 10% by volume or more. Also by subjecting the rice flour ground by the aforementioned grinding machine to a classifier to remove the particles having larger particle diameters, it is possible to increase the particles of 10 µm or less to a level of 10% by volume or more.

It is also preferable that the particle diameter at D90 of the cumulative distribution in the particle size distribution is 100 µm or less, the particle diameter at D50 is 50 µm or less, and the particle diameter at D10 is 10 µm or less. The cumulative distribution in the particle size distribution is represented as a volume fraction of the particles integrated from the smaller particle diameters. For example, the particle diameter at D90 of the cumulative distribution is the particle diameter when the volume fraction integrated from the smaller particle diameters becomes 90%.

Since the presently disclosed damaged starch-rich rice flour has a bread hardening-preventing effect, it can be used for the purpose of preventing the hardening of the resultant bread and can be used as a bread hardening preventing agent in which this damaged starch-rich rice flour is contained as an active ingredient.

It is also possible to use the aforementioned damaged starch-rich rice flour itself as a bread hardening preventing agent or to use the bread hardening preventing agent whose active ingredient is this damaged starch-rich rice flour in producing a bread whose hardening is prevented. Also, it is possible to use the aforementioned damaged starch-rich rice flour to produce a bread hardening preventing agent.

Moreover, the presently disclosed bread hardening preventing agent may be allowed to contain, in addition to the aforementioned damaged starch-rich rice flour, any optional component as required. While such an optional component is not limited particularly, those which may be contained are additives such as gluten, milk component, egg component, dietary fiber, thickening polysaccharides, emulsifier, fat, modified starch, and the like.

A conventional bread hardening preventing agent contains as an active ingredient an additive such as an emulsifier or a modified starch. Nevertheless, the presently disclosed damaged starch-rich rice flour, even when being used as it is for the purpose of preventing the hardening of a bread in the absence of the aforementioned optional components, can prevent the hardening of the resultant bread satisfactorily. As a result, a recent commercial need to reduce the amount of a food product additive such as an emulsifier and to obtain a novel hardening preventing agent will be satisfied.

Also in the presently disclosed bread hardening-preventing method, the presently disclosed damaged starch-rich rice flour is incorporated to produce a bread.

It is preferable that the aforementioned damaged starch-rich rice flour is contained in a dough raw material such as a premix flour for bread described below and/or a bread-intended dough obtained therefrom in producing a bread, since it allows the bread hardening prevention to be realized efficiently.

The amount of the presently disclosed damaged starch-rich rice flour used in a bread and the damaged starch-rich rice flour content in the presently disclosed premix flour for bread is 0.1 to 15 parts by mass, preferably of 0.1 to 10 parts by mass, and still further preferably of 0.3 to 10 parts by mass based on 100 parts by mass of a wheat flour, which can prevent the hardening of the resultant bread and which result in satisfactory texture and flavor.

Also, the amount of the aforementioned damaged starch-rich rice flour in a bread and the content in a premix flour for bread are preferably 0.5 to 10 parts by mass, and still further preferably of 1 to 8 parts by mass, which result in a high bread hardening-preventing effect and a satisfactory texture and flavor, as well as an excellent bread-making operability with no post bread-making deformation thereby giving a satisfactory appearance of the bread.

When the presently disclosed damaged starch-rich rice flour has a damaged starch content of 15% by mass or more and 30% by mass or less, an amount preferably of 0.3 parts by mass or more based on 100 parts by mass of a wheat flour allows a preferable bread hardening-preventing effect to be exerted easily. Also when the presently disclosed damaged starch-rich rice flour has a damaged starch content of more than 30% by mass and 45% by mass or less, an amount preferably of 0.1 parts by mass or more based on 100 parts by mass of a wheat flour allows a preferable bread hardening-preventing effect to be exerted easily.

On the other hand, the amount of the presently disclosed damaged starch-rich rice flour in a bread and the damaged starch-rich rice flour content in the presently disclosed premix flour for bread are preferably 15 parts by mass or less based on 100 parts by mass of a wheat flour. In such a case, it is possible to obtain satisfactory bread-making operability and bread swelling, and a greater specific volume of the bread after baking as well as a satisfactory flavor.

The cereal flour employed in the presently disclosed premix flour for bread may for example be any cereal flour employed in a bread ordinarily such as wheat flour, durum wheat flour, rye flour, barley flour, oat flour, maize flour, damaged starch-poor rice flour (preferably the damaged starch content is less than 15% by mass, and more preferably the damaged starch content is 5% by mass or less), coarse semolina flour, and the like, which may be employed alone or two or more of them may be employed in combination. In such a case, a wheat flour is used preferably as a major cereal flour because it provides satisfactory texture, flavor, and baking quality.

While the wheat flour is classified generally into a hard wheat flour, medium flour, or soft wheat flour, the hard wheat flour is made from a hard wheat as a raw material and has a large amount of proteins, and when it is kneaded with water it gives a large amount of gluten in the resultant dough and exhibits a high consistency. The amount of proteins is decreased in the order of a medium flour and then a soft wheat flour, with the consistency of the gluten being decreased correspondingly. In general, a hard wheat flour is employed preferably in a bread.

Also in the presently disclosed premix flour for bread, an auxiliary material used ordinarily in a bread-intended dough raw material can be contained appropriately as long as the presently disclosed effect is not affected adversely. Such an auxiliary material may for example be one or more ingredients selected from yeasts, yeast foods, salt, saccharides, fats, gluten, starches (an ordinary starch has a damaged starch content of 3% by mass or less), thickening polysaccharides, milk components, egg components, inorganic salts, and vitamins.

A benefit of using the presently disclosed damaged starch-rich rice flour for the purpose of preventing the bread hardening is based on the fact that even when the presently disclosed damaged starch-rich rice flour is contained in an ordinary bread-intended dough raw material or a bread-intended dough, the hardening of the resultant bread can be prevented successfully, thereby allowing the amount of an emulsifier or modified starch employed conventionally for the purpose of preventing the hardening to be reduced without impairing the texture or flavor.

In addition, even in the case of a bread conventionally containing a damaged starch-poor rice flour (so-called rice flour bread), by using the presently disclosed damaged starch-rich rice flour, the hardening of the resultant rice flour bread can be prevented without impairing the texture or flavor, as is realized also as a presently disclosed benefit.

The aforementioned yeast is present, based on 100 parts by mass of a wheat flour, in an amount of 1 to 7 parts by mass.

The aforementioned salt is present, based on 100 parts by mass of a wheat flour, in an amount of 0.3 to 5 parts by mass.

The aforementioned saccharide may for example be a monosaccharide and an oligosaccharide such as sugar, glucose, fructose, trehalose, isomalto-oligosaccharide, and the like; a polysacccharide such as starch syrup, powdered starch syrup, dextrin, and the like; a sugar alcohol such as sorbitol, maltitol, palatinose, reduced-sugar syrup, and the like. These may be employed alone or in combination of two or more of them. The aforementioned saccharide is present, based on 100 parts by mass of a wheat flour, in an amount of 2 to 30 parts by mass.

The aforementioned fat may for example be a butter, margarine, shortening, lard, rapeseed oil, soybean oil, olive oil, and the like. These may be employed alone or in combination of two or more of them.

The aforementioned milk component may for example be powdered milk, skim milk powder, whey protein (WPC, WPI, and the like), and the like. These may be employed alone or in combination of two or more of them.

The aforementioned egg component may for example be egg yolk, albumen, whole egg, other eggs, and the like. These may be employed alone or in combination of two or more of them.

The aforementioned inorganic salt may for example be ammonium chloride, magnesium chloride, ammonium carbonate, sodium hydrogen carbonate, calcinated calcium, ammonium alum, and the like. These may be employed alone or in combination of two or more of them. As a result, the bread dough can readily be swollen.

The aforementioned vitamin may for example be vitamin C, vitamin B1, vitamin B2, vitamin D, vitamin E, carotene, and the like.

The presently disclosed bread production method may be any of various bread-making methods such as straight dough method (straight method), sponge dough method, pre-ferment and dough method, sour dough method, sakadane dough method, gelatinized wheat dough method, frozen dough method, and the like. It is also possible to use an automatic baking machine to produce the presently disclosed bread. Among these, straight dough method, sponge dough method, and frozen dough method are preferable.

An ordinary bread-making step involves mixing, fermentation, dividing/rounding, bench time, moulding, final proof and baking in this order. The straight dough method involves dividing/rounding after mixing and fermentation, while the sponge dough method involves dividing/rounding after sponge dough mixing, sponge dough fermentation, main dough mixing, and floor time. The automatic baking machine involves a bread-making step in which mixing, fermentation, and baking are conducted and dividing/rounding and moulding may sometimes be omitted.

While mixing is conducted to form a bread dough, kneading is conducted with adding water in an amount for example of 45 to 90 parts by mass based on 100 parts by mass of a wheat flour.

The heating method for producing a bread may for example be baking (oven, iron plate, and the like), deep-frying, steaming, and the like. It is preferable to bake the bread-intended dough containing the aforementioned damaged starch-rich rice flour to obtain a baked bread, because the flavor and the texture become satisfactory. An ordinary baking condition involves a baking temperature of about 150 to 240°C and a baking time of about 8 to 60 minutes.

By the aforementioned method, the presently disclosed bread can be obtained.

Also since the presently disclosed damaged starch-rich rice flour is incorporated in the presently disclosed bread, the time-dependent hardening is prevented, and satisfactory texture and flavor are imparted. In addition, even the aforementioned hardening preventing agents other than the presently disclosed damaged starch-rich rice flour are not incorporated, the presently disclosed bread allows the time-dependent hardening to be prevented and becomes a bread having satisfactory texture and flavor. It is also possible to use the presently disclosed damaged starch-rich rice flour in combination with the aforementioned other hardening preventing agent.

The type of the presently disclosed bread is not limited particularly, and both of a swelled bread and a non-swelled bread are intended.

When classifying breads practically, those which may be exemplified are tin breads, roll breads, hard rolls, sweet buns (Japanese or western types), and the like (classification method by Japan Baking Industry Association).

### Examples

The present invention (present disclosure) is detailed in the following Examples, but the present invention (present disclosure) is not limited to these Examples.

### <Test 1>

Using the bread-making raw material having the formulation shown in Table 1 below, an automatic baking machine (National Model SD-BT-113) was operated in the tin bread/quick baking mode to produce a tin bread. The wheat flour employed was a hard wheat flour (Kingstar produced by Showa Sangyo Co., Ltd.).

### [Tin bread production condition using automatic baking machine]

Mixing:20 minutes
Fermentation:10 minutes
Mixing:5 minutes
Final proof:30 minutes
Baking:55 minutes

[Table 1]

**Table 1**

| Ratio | Example 1 to 7 Comparative Example 2 and 3 | Comparative Example 1 |
|---|---|---|
| Wheat flour | 100 | 100 |
| Each rice flour | 7 | - |
| Butter | 5 | 5 |
| Sugar | 7 | 7 |
| Salt | 2 | 2 |
| Dry yeast | 1 | 1 |
| Water | 77 | 72 |

### <Each rice flour preparation method>

A polished rice was subjected to various grinding machines (Comparative Example 2:ball mill, Comparative Example 3:hammer mill, Example 1 and 6:cyclone mill, Example 2:counter-current pulverization, Example 3:flash mill, Example 4, 5, and 7:jet-mill) to prepare the rice flours having the damaged starch contents and the particle size distributions shown in Table 2.

The rice flour employed in each experiment was subjected to the measurement of its damaged starch content and particle size distribution (cumulative distribution and content for particle diameter of 10 µm or less) by the following methods.

### <Method for measuring rice flour's damaged starch content>

The rice flour employed in each experiment was subjected to the measurement of its damaged starch content using a commercially available kit (Starch Damage Assay Kit manufactured by MegaZyme).

Typically, 100 mg of each rice flour sample was combined with 1 ml of α-amylase solution (derived from Aspergillus oryzae, 50 unit/ml) which had previously been pre-incubated for 10 minutes at 40°C, stirred, and then treated for 10 minutes at 40°C. Subsequently, 5 ml of a citric acid-phosphoric acid aqueous solution (pH2.5) was added to quench the reaction, and the centrifugation (1,000g, 5 minutes) was conducted to obtain a supernatant. 0.1 ml of this supernatant was combined with an amyloglucosidase solution (derived from Aspergillus niger, 2 unit/0.1 ml) and treated for 20 minutes at 40°C, and then measured for its absorbance at 510 nm, and then from the absorbance thus obtained the amount of glucose produced was calculated to calculate the amount of the damaged starch contained in the rice flour sample.

### <Particle size distribution measurement method>

The rice flour employed in each experiment was subjected to the measurement of its "particle diameter" and "particle size distribution" using "Laser diffraction type particle size distribution meter HELOS & RODOS" manufactured by Japan Laser Corp. in a dry mode.

The resultant tin bread was evaluated for its hardness and swelling by the following methods. The results of these evaluations are shown in Table 2.

### <Time-dependent hardness evaluation>

Each of the bread 0 day and 3 days after baking was sliced into a thickness of 16 mm, a 3.5 cm square piece was cut out of the crumb and then compressed to a thickness of 8 mm, and the stress (g) under the compression was measured using Sun Rheometer COMPAC-100 manufactured by Sun Scientific Co., Ltd.

### <Evaluation of swelling>

By measuring the height of the bread after baking, the swelling of the bread was evaluated.

### <Texture>

The resultant tin bread was evaluated for its texture 3 days after baking by 10 panelists according to the following evaluation criteria. The results of these evaluations are shown in Table 2.
1: When eating the bread, the bread exhibited dry texture and mouthfeel intensely.
2: When eating the bread, the bread exhibited dry texture and mouthfeel.
3: When eating the bread, the bread exhibited dry texture and mouthfeel poorly.
4: When eating the bread, the bread exhibited no dry texture or mouthfeel and was moist.
5: When eating the bread, the bread exhibited no dry texture or mouthfeel and was extremely moist.

By adding the rice flour whose damaged starch content was 15% or more, it was possible to prevent the hardening of the bread after baking. Such a bread hardening-preventing effect of this damaged starch-rich rice flour was more evident when the rice flour had a higher damaged starch content and especially evident when the rice flour whose damaged starch content exceeded 30% was added (Examples 5 to 7).

[Table 2]

**Table 2**

| | | Comparative Example 1 (no rice flour) | Comparative Example 2 | Comparative Example 3 | Example 1 | Example 2 | Example 3 | Example 4 | Example 5 | Example 6 | Example 7 |
|---|---|---|---|---|---|---|---|---|---|---|---|
| Rice flour amount (parts by mass) | | 0 | 7.0 | 7.0 | 7.0 | 7.0 | 7.0 | 7.0 | 7.0 | 7.0 | 7.0 |
| Damaged starch (%) | | - | 2.5 | 9.3 | 15.0 | 16.1 | 25.1 | 30.0 | 31.2 | 36.4 | 40.4 |
| Particle size of 10 µm or less (%) | | - | 2 | 1 | 13 | 15 | 18 | 85 | 87 | 50 | 100 |
| Cumulative distribution (µm) | D10 | - | 18 | 54 | 8.4 | 7.7 | 6.4 | 1.2 | 1.2 | 3.8 | 1.1 |
| | D50 | - | 49 | 89 | 30 | 26 | 23 | 5.6 | 5.3 | 10 | 3.5 |
| | D90 | - | 102 | 134 | 87 | 72 | 65 | 12 | 11 | 16 | 6.7 |
| Bread evaluation | | | | | | | | | | | |
| Hardness (g) | day + 0 | 350 | 348 | 355 | 303 | 290 | 278 | 267 | 266 | 285 | 270 |
| | day + 3 | 706 | 710 | 715 | 661 | 643 | 633 | 617 | 595 | 520 | 580 |
| Bread height (cm) | | 14.5 | 14.5 | 14.5 | 14.5 | 14.5 | 14.5 | 14.5 | 14.5 | 14.5 | 14.5 |
| Texture | | 1 | 1 | 2 | 3 | 3 | 3 | 3 | 4 | 5 | 5 |

| | | | | | | | | | | | |
|---|---|---|---|---|---|---|---|---|---|---|---|
| Rice flour amount: Amount (parts by mass) of added rice flour based on 100 parts by mass of wheat flour Cumulative distribution: Particle diameter (µm) at D10, D50, and D90 of cumulative distribution | | | | | | | | | | | |

### <Test 2>

Using the bread-making raw material having the formulation shown in Table 3 below, a tin bread was produced similarly to the aforementioned

### <Test 1> using the automatic baking machine (National Model SD-BT-113).

The rice flour employed in Test Examples 1 to 6 was the rice flour employed in Example 2.

The resultant tin breads were evaluated according to <Test 1>. The results of these evaluations are shown in Table 4.

A larger amount of the added damaged starch-rich rice flour exhibited a higher preventing effect on the bread hardening. On the other hand, an amount of the added damaged starch-rich rice flour of 15 parts by mass or less resulted in a better swelling of the bread together with a satisfactory texture. Moreover, an amount of the added damaged starch-rich rice flour of 0.3 parts by mass to 10 parts by mass resulted in an especially satisfactory swelling of the bread.

[Table 3]

**Table 3**

| | Test Example 1 | Test Example 2 | Test Example 3 | Test Example 4 | Test Example 5 | Test Example 6 |
|---|---|---|---|---|---|---|
| Wheat flour | 100 | 100 | 100 | 100 | 100 | 100 |
| Rice flour | 0.3 | 5 | 7 | 10 | 15 | 20 |
| Butter | 5 | 5 | 5 | 5 | 5 | 5 |
| Sugar | 7 | 7 | 7 | 7 | 7 | 7 |
| Salt | 2 | 2 | 2 | 2 | 2 | 2 |
| Dry yeast | 1 | 1 | 1 | 1 | 1 | 1 |
| Water | 72 | 76 | 77 | 79 | 83 | 86 |

[Table 4]

**Table 4**

| | | Test Example 1 | Test Example 2 | Test Example 3 | Test Example 4 | Test Example 5 | Test Example 6 |
|---|---|---|---|---|---|---|---|
| Rice flour amount (parts by mass) | | 0.3 | 5.0 | 7.0 | 10.0 | 15.0 | 20.0 |
| Damaged starch (%) | | 16.1 | 16.1 | 16.1 | 16.1 | 16.1 | 16.1 |
| Particle size of 10 µm or less (%) | | 15 | 15 | 15 | 15 | 15 | 15 |
| Cumulative distribution (µm) | D10 | 7.7 | 7.7 | 7.7 | 7.7 | 7.7 | 7.7 |
| | D50 | 26 | 26 | 26 | 26 | 26 | 26 |
| | D90 | 72 | 72 | 72 | 72 | 72 | 72 |
| Bread evaluation | | | | | | | |
| Hardness (g) | day + 0 | 325 | 318 | 290 | 300 | 297 | 305 |
| | day + 3 | 683 | 667 | 643 | 635 | 630 | 628 |
| Bread height (cm) | | 14.5 | 14.5 | 14.5 | 13.5 | 13.0 | 12.5 |
| Texture | | 2 | 2 | 3 | 3 | 3 | 2 |

| | | | | | | | |
|---|---|---|---|---|---|---|---|
| Rice flour amount: Amount (parts by mass) of added rice flour based on 100 parts by mass of wheat flour Cumulative distribution: Particle diameter (µm) at D10, D50, and D90 of cumulative distribution | | | | | | | |

### <Test 3>

Using the bread-making raw material having the formulation similar to those of Examples 1 to 7 and Comparative Examples 2 and 3 in Table 1 shown above, tin breads were produced similarly to the aforementioned <Test 1> using an automatic baking machine (National Model SD-BT-113). The resultant tin breads were evaluated according to <Test 1>. The results of this evaluation are shown in Table 5.

### <Each rice flour preparation method>

A polished rice was subjected to various grinding machines (Test Example 7: hammer mill, Test Example 8, 9, and 10: flash mill, Test Example 11: jet-mill) to prepare the rice flours having the damaged starch contents and the particle size distributions shown in Table 5.

A higher ratio of the particle sizes of 10 µm or less in the damaged starch-rich rice flour resulted in a higher preventing effect of the hardening of the bread. Also, the cumulative distribution D50 in the particle size distribution of the damaged starch-rich rice flour of 40 µm or less prevented the bread hardening more effectively.

[Table 5]

**Table 5**

| | | Test Example 7 | Test Example 8 | Test Example 9 | Test Example 10 | Test Example 11 |
|---|---|---|---|---|---|---|
| Rice flour amount (parts by mass) | | 7.0 | 7.0 | 7.0 | 7.0 | 7.0 |
| Damaged starch (%) | | 16.1 | 16.4 | 22.7 | 25.1 | 26.0 |
| Particle size of 10 µm or less (%) | | 15 | 9 | 15 | 18 | 50 |
| Cumulative distribution (µm) | D10 | 7.7 | 11 | 7.4 | 6.4 | 2.2 |
| | D50 | 26 | 48 | 28 | 23 | 10 |
| | D90 | 72 | 100 | 87 | 65 | 35 |
| Bread evaluation | | | | | | |
| Hardness (g) | day + 0 | 290 | 302 | 295 | 278 | 320 |
| | day + 3 | 643 | 690 | 640 | 633 | 625 |
| Bread height (cm) | | 14.5 | 13.8 | 14.5 | 14.5 | 14.5 |
| Texture | | 3 | 2 | 3 | 3 | 3 |

| | | | | | | |
|---|---|---|---|---|---|---|
| Rice flour amount: Amount (parts by mass) of added rice flour based on 100 parts by mass of wheat flour Cumulative distribution: Particle diameter (µm) at D10, D50, and D90 of cumulative distribution | | | | | | |

### <Test 4>

In Comparative Examples 3 and 4 and Examples 8 to 10, a straight dough method was employed to produce tin breads.

Comparative Example 4 employed the rice flour which was the rice flour in the aforementioned Comparative Example 2. Examples 8, 9, and 10 employed the rice flours which were the rice flours employed in Example 2, 3, and 6, respectively. The amount of the rice flour added in each of Comparative Example 4 and Examples 8 to 10 was 5 parts by mass based on 100 parts by mass of a wheat flour employed, and in Comparative Example 3, no rice flour was added.

In Comparative Example 4 and Examples 8 to 10, 100 parts by mass of the wheat flour, 5 parts by mass of the rice flour, 5 parts by mass of the granulated sugar, 2 parts by mass of salt, 2 parts by mass of the skim milk powder, 2 parts by mass of the yeast, 0.1 parts by mass of the yeast food, 71 parts by mass of water were mixed at a low speed for 2 minutes and at a middle speed for 3.5 minutes, and thereafter combined with 5 parts by mass of the shortening and then further mixed at a low speed for 1 minute and at a middle speed for 3 minutes (dough temperature after mixing was 27°C). The resultant dough was subjected to fermentation at 27°C and a humidity of 75% for 90 minutes, and then subjected to dividing into 440g pieces and then rounding. After 20 minutes-bench time, followed by molding into a U-shape, packing into a one loaf baking mold, final proof at 38°C and a humidity of 85% for 45 minutes, and then baking at 200°C for 30 minutes, an open-top white bread was obtained.

In Comparative Example 3, the rice flour was not added and the amount of water was changed to 69 parts by mass, and an open-top white bread was otherwise similarly obtained.

The resultant tin breads were evaluated according to <Test 1>. The results of this evaluation are shown in Table 6.

When the rice flour whose damaged starch content is 15% or more was added, it was possible, even when the bread was made by the straight dough method, to prevent the hardening of the bread after baking. The bread hardening-preventing effect of this damaged starch-rich rice flour was more evident at a higher damaged starch content, and was especially evident when the rice flour whose damaged starch content exceeded 30% was added (Example 10).

[Table 6]

**Table 6**

| < Straight dough method > | | | | | | |
|---|---|---|---|---|---|---|
| | | Comparative Example 3 | Comparative Example 4 | Example 8 | Example 9 | Example 10 |
| Rice flour amount (parts by mass) | | - | 5 | 5 | 5 | 5 |
| Damaged starch (%) | | - | 2.5 | 16.1 | 25.1 | 36.4 |
| Particle size of 10 µm or less (%) | | - | 2 | 15 | 18 | 50 |
| Cumulative distribution (µm) | D10 | - | 18 | 7.7 | 6.4 | 3.8 |
| | D50 | - | 49 | 26 | 23 | 10 |
| | D90 | - | 102 | 72 | 65 | 16 |
| Bread evaluation | | | | | | |
| Hardness (g) | day + 0 | 130 | 169 | 120 | 96 | 92 |
| | day + 1 | 255 | 293 | 230 | 192 | 192 |
| | day + 2 | 368 | 406 | 335 | 291 | 273 |
| | day + 3 | 488 | 529 | 441 | 392 | 353 |
| Bread height (cm) | | 14.5 | 14.5 | 15.0 | 15.0 | 15.0 |
| Texture | | 1 | 1 | 3 | 4 | 5 |

| | | | | | | |
|---|---|---|---|---|---|---|
| Rice flour amount: Amount (parts by mass) of added rice flour based on 100 parts by mass of wheat flour Cumulative distribution: Particle diameter (µm) at D10, D50, and D90 of cumulative distribution | | | | | | |

### <Test 5>

A bread was also produced similarly to the aforementioned Test 4 except for adding the rice flour employed in Example 8 in an amount of 0.3 parts by mass and 10 parts by mass based on 100 parts by mass of a wheat flour.

A bread was also produced similarly to the aforementioned Test 4 except for adding the rice flour employed in Example 9 in an amount of 0.3 parts by mass and 10 parts by mass based on 100 parts by mass of a wheat flour.

A bread was also produced similarly to the aforementioned Test 4 except for adding the rice flour employed in Example 10 in an amount of 0.3 parts by mass and 10 parts by mass based on 100 parts by mass of a wheat flour.

Each bread obtained by the straight dough method exhibited the hardening prevention, bread height, and texture, which were all satisfactory.

### <Test 6>

In Comparative Examples 5 and 6 and Examples 11 to 13, a sponge dough method was employed to produce open-top white breads.

Comparative Example 6 employed the rice flour which was the rice flour in the aforementioned Comparative Example 2. Examples 11, 12, and 13 employed the rice flours which were the rice flours employed in Example 2, 3, and 6, respectively. The amount of the rice flour added in each of Comparative Example 6 and Examples 11 to 13 was 5 parts by mass based on 100 parts by mass of a wheat flour employed, and in Comparative Example 5, no rice flour was added.

In Comparative Example 6 and Examples 11 to 13, 70 parts by mass of the wheat flour, 1 part by mass of the yeast, and 40 parts by mass of water were mixed at a low speed for 3 minutes and at a middle speed for 2 minutes to obtain a dough, which was then subjected to fermentation at 28°C and a humidity of 85% for 4 hours. The fermented dough was then combined with 30 parts by mass of the wheat flour, 5 parts by mass of the rice flour, 9 parts by mass of the granulated sugar, 2 parts by mass of salt, 2 parts by mass of the yeast, 0.1 parts by mass of the yeast food, and 25 parts by mass of water, and mixed at a low speed for 3 minutes and at a middle speed for 5 minutes, and thereafter combined with 7.5 parts by mass of the shortening and then further mixed at a low speed for 2 minutes and at a middle speed for 2 minutes (dough temperature after mixing was 27°C). The resultant dough was subjected to fermentation at 27°C and a humidity of 85% for 20 minutes, and then subjected to dividing into 440g pieces and then rounding. After 25 minutes-bench time, followed by molding into a U-shape, packing into a one loaf baking mold, final proof at 38°C and a humidity of 85% for 45 minutes, and then baking at 200°C for 40 minutes, an open-top white bread was obtained.

In Comparative Example 5, the rice flour was not added and an open-top white bread was otherwise similarly obtained.

When the rice flour whose damaged starch content is 15% or more was added, it was possible, even when the bread was made by the sponge dough method, to prevent the hardening of the bread after baking. The bread hardening-preventing effect of this damaged starch-rich rice flour was more evident at a higher damaged starch content, and was especially evident when the rice flour whose damaged starch content exceeded 30% was added (Example 13).

[Table 7]

**Table 7**

| <Sponge dough method> | | | | | | |
|---|---|---|---|---|---|---|
| | | Comparative Example 5 | Comparative Example 6 | Example 11 | Example 12 | Example 13 |
| Rice flour amount (parts by mass) | | - | 5 | 5 | 5 | 5 |
| Damaged starch (%) | | - | 2.5 | 16.1 | 25.1 | 36.4 |
| Particle size of 10 µm or less (%) | | - | 2 | 15 | 18 | 50 |
| Cumulative distribution (µm) | D10 | - | 18 | 7.7 | 6.4 | 3.8 |
| | D50 | - | 49 | 26 | 23 | 10 |
| | D90 | - | 102 | 72 | 65 | 16 |
| Bread evaluation | | | | | | |
| Hardness (g) | day + 0 | 89 | 93 | 80 | 71 | 66 |
| | day + 1 | 200 | 203 | 187 | 170 | 156 |
| | day + 2 | 326 | 322 | 295 | 266 | 241 |
| | day + 3 | 445 | 449 | 401 | 368 | 334 |
| Bread height (cm) | | 15.0 | 15.0 | 15.0 | 15.0 | 15.0 |
| Texture | | 1 | 1 | 3 | 4 | 5 |

| | | | | | | |
|---|---|---|---|---|---|---|
| Rice flour amount: Amount (parts by mass) of added rice flour based on 100 parts by mass of wheat flour Cumulative distribution: Particle diameter (µm) at D10, D50, and D90 of cumulative distribution | | | | | | |

### <Test 7>

A bread was also produced similarly to the aforementioned Test 6 except for adding the rice flour employed in Example 11 in an amount of 0.3 parts by mass and 10 parts by mass based on 100 parts by mass of a wheat flour.

A bread was also produced similarly to the aforementioned Test 6 except for adding the rice flour employed in Example 12 in an amount of 0.3 parts by mass and 10 parts by mass based on 100 parts by mass of a wheat flour.

A bread was also produced similarly to the aforementioned Test 6 except for adding the rice flour employed in Example 13 in an amount of 0.3 parts by mass and 10 parts by mass based on 100 parts by mass of a wheat flour.

Each bread obtained by the sponge dough method exhibited the hardening prevention, bread height and texture, which were all satisfactory.

### <Production Example 1>

100 parts by mass of the wheat flour, 5 parts by mass of [the rice flour prepared in Example 2], 3 parts by mass of the granulated sugar, 1.5 parts by mass of salt, 2 parts by mass of the yeast, and 71 parts by mass of water were mixed at a low speed for 2 minutes and at a middle speed for 5 minutes, and thereafter combined with 2 parts by mass of the shortening and then further mixed at a middle speed for 4 minutes and at a high speed for 2 minutes (dough temperature after mixing was 28°C). The resultant dough was subjected to fermentation at 27°C and a humidity of 75% for 90 minutes, and then subjected to dividing into 250 g/unit pieces, which were joined together. After 20 minutes-bench time, followed by molding into a U-shape, packing 6 pieces into three loaf baking mold, final proof at 38°C and a humidity of 85% for 45 minutes, and then baking at 205°C for 30 minutes, an open-top white bread was obtained. Also an open-top white bread was obtained similarly except that the rice flour was not added and the amount of water was changed to 69 parts by mass.

The open-top white bread produced by adding the rice flour exhibited a sufficient hardening prevention even when 3 days had passed after baking, showing an excellent quality when compared with those to which no rice flour was added.

### <Production Example 2>

100 parts by mass of the wheat flour, 8 parts by mass of [rice flour prepared in Example 2], 7 parts by mass of sugar, 2 parts by mass of the skim milk powder, and 1 part by mass of salt were mixed to make Bread Premix A. Bread Premix B was also made while changing [rice flour prepared in Example 2] into [rice flour prepared in Comparative Example 2].

100 parts by mass of Bread Premix A was combined with 3 parts by mass of the dry yeast and 60 parts by mass of water, and mixed for 7 minutes, and thereafter combined with 12 parts by mass of the butter, mixed for 8 minutes to obtain a roll bread dough. The resultant dough was fermented, divided, and then subjected to the bench time, followed by moulding, final proof, and then baking in an oven at 210°C for 10 minutes to obtain Roll Bread A. In a similar manner except for changing "Bread Premix A" to "the aforementioned Premix B", Roll Bread B was obtained.

Roll Bread A obtained using Bread Premix A exhibited a satisfactory hardening prevention and was a bread of an excellent quality. On the other hand, Roll Bread B obtained using Bread Premix B exhibited an advanced hardening when 3 days had passed after baking.

### <Production Example 3>

100 parts by mass of the wheat flour, 10 parts by mass of [rice flour prepared in Example 2], 5 parts by mass of sugar, 6 parts by mass of the rapeseed oil, 2 parts by mass of the skim milk powder, and 1 part by mass of salt were mixed to make an automatic baking machine-oriented Bread Premix C.

Also an automatic baking machine-oriented Bread Premix D was made in which [rice flour prepared in Example 2] in the automatic baking machine-oriented Bread Premix C was changed to [rice flour prepared in Example 6].

In addition, an automatic baking machine-oriented Bread Premix E was made in which [rice flour prepared in Example 2] in the automatic baking machine-oriented Bread Premix C was changed to [rice flour prepared in Comparative Example 2].

250 parts by mass of the automatic baking machine-oriented Bread Premix C, 160 parts by mass of water, and 2 parts by mass of the dry yeast were subjected to an automatic baking machine (National Model SD-BT-113) in the quick baking mode to produce Tin Bread C.

In a similar manner except for changing "automatic baking machine-oriented Bread Premix C" to "the aforementioned Premix D", Tin Bread D was produced.

In a similar manner except for changing "automatic baking machine-oriented Bread Premix C" to "the aforementioned Premix E", Tin Bread E was produced.

The Tin Bread C and D produced using the automatic baking machine-oriented Bread Premixes C and D exhibited a satisfactory hardening prevention. Especially Tin Bread D produced using the automatic baking machine-oriented Bread Premix D exhibited a marked hardening prevention, and was a tin bread of an excellent quality. On the other hand, Tin Bread E obtained using the automatic baking machine-oriented Bread Premix E exhibited an advanced hardening when 3 days had passed after baking.

### <Production Example 4>

100 parts by mass of the wheat flour and 7 parts by mass of [rice flour prepared in Example 2] were mixed to make Bread Premix F.

Also Bread Premix G was made in which [rice flour prepared in Example 2] of Bread Premix F was changed to [rice flour prepared in Example 6].

Also Bread Premix H was made in which [rice flour prepared in Example 2] of Bread Premix F was changed to [rice flour prepared in Comparative Example 2].

To a mixer, 100 parts by mass of Bread Premix F, 4 parts by mass of the dry yeast, and 60 parts by mass of water were added, which were mixed for 5 minutes to obtain a dough, which was subjected to fermentation under the condition of a temperature of 27°C and a humidity of 75% for 4 hours to obtain a sponge dough. The aforementioned sponge dough was combined with 100 parts by mass of Bread Premix F, 3 parts by mass of salt, 15 parts by mass of sugar, 6 parts by mass of the skim milk powder, and 76 parts by mass of water, mixed for 5 minutes mixing, and thereafter combined with 10 parts by mass of the butter, then mixed further for 5 minutes to obtain a mixed dough. The resultant mixed dough was subjected to a 20 minutes-floor time and then divided into 250g/unit pieces, which were allowed to have a 20 minutes-bench time. Subsequently, this dough was moulded and 6 pieces were packed in a 3 loaf baking mold, which was allowed to have a final proof and then baked to produce a tin bread.

"Bread Premix F" was changed to "the aforementioned Bread Premix G" and a bread was otherwise similarly produced to obtain Tin Bread G. Also, "Bread Premix F" was changed to "Bread Premix H" and a bread was otherwise similarly produced to obtain Tin Bread H.

Tin Breads F and G produced using Bread Premixes F and G exhibited a satisfactory hardening prevention. Especially the tin bread produced using Bread Premix G exhibited a marked hardening prevention, and was a tin bread of an excellent quality. On the other hand, Tin Bread H obtained using Bread Premix H exhibited an advanced hardening when 3 days had passed after baking.

As discussed above, when producing a bread while adding the rice flour having a damaged starch content of 15% or more (by automatic baking machine, straight dough method, sponge dough method, and the like), the hardening of the resultant bread was prevented. Also, these breads thus obtained had satisfactory bread height and texture.

Especially, the bread obtained using the rice flour having a damaged starch content of 25% or more exhibited a high hardening-preventing effect, and when using the rice flour having a damaged starch content of 30% or more, the bread hardening was prevented markedly.

### Industrial Applicability

Since the present technology allow the time-dependent hardening of a bread to be prevented, it can be utilized in a bread which is produced industrially and distributed commercially.

## Claims

1. Use of an agent whose active ingredient is a rice flour whose damaged starch content is 15% by mass or more in an amount of 0.1 to 15 parts by mass based on 100 parts by mass of a wheat flour for preventing bread hardening.

2. The use according to claim 1, wherein the active ingredient is a rice flour whose damaged starch content is more than 30% by mass.

3. A bread hardening-preventing method which incorporates a rice flour whose damaged starch content is 15% by mass or more in an amount of 0.1 to 15 parts by mass based on 100 parts by mass of a wheat flour, for preventing bread hardening when producing bread.

4. A bread production method which incorporates a rice flour whose damaged starch content is 15% by mass or more in an amount of 0.1 to 15 parts by mass based on 100 parts by mass of a wheat flour.

5. A premix flour for bread containing 0.1 to 15 parts by mass of a rice flour whose damaged starch content is 15% by mass or more based on 100 parts by mass of a wheat flour.

6. A bread in which a rice flour whose damaged starch content is 15% by mass or more is present in an amount of 0.1 to 15 parts by mass based on 100 parts by mass of a wheat flour.

## Patentansprüche

1. Verwendung eines Mittels, dessen Wirkstoff ein Reismehl ist, dessen Gehalt an beschädigter Stärke 15 Gewichts-% oder mehr beträgt, in einer Menge von 0,1 bis 15 Gewichtsteilen bezogen auf 100 Gewichtsteile eines Weizenmehls zur Vermeidung der Aushärtung von Brot.

2. Die Verwendung gemäß Anspruch 1, wobei der Wirkstoff ein Reismehl ist, dessen Gehalt an beschädigter Stärke mehr als 30 Gewichts-% beträgt.

3. Ein Verfahren zur Vermeidung der Aushärtung von Brot, wobei ein Reismehl eingearbeitet wird, dessen Gehalt an beschädigter Stärke 15 Gewichts-% oder mehr beträgt, in einer Menge von 0,1 bis 15 Gewichtsteilen bezogen auf 100 Gewichtsteile eines Weizenmehls, zur Vermeidung der Aushärtung von Brot bei der Herstellung von Brot.

4. Ein Verfahren zur Herstellung von Brot, wobei ein Reismehl eingearbeitet wird, dessen Gehalt an beschädigter Stärke 15 Gewichts-% oder mehr beträgt, in einer Menge von 0,1 bis 15 Gewichtsteilen bezogen auf 100 Gewichtsteile eines Weizenmehls.

5. Ein vorgemischtes Mehl für Brot enthaltend 0,1 bis 15 Gewichtsteile eines Reismehls, dessen Gehalt an beschädigter Stärke 15 Gewichts-% oder mehr beträgt bezogen auf 100 Gewichtsteile eines Weizenmehls.

6. Ein Brot, in dem ein Reismehl enthalten ist, dessen Gehalt an beschädigter Stärke 15 Gewichts-% oder mehr beträgt, und das in einer Menge von 0,1 bis 15 Gewichtsteilen bezogen auf 100 Gewichtsteile eines Weizenmehls vorliegt.

## Revendications

1. Utilisation d'un agent dont l'ingrédient actif est une farine de riz dont la teneur en amidon endommagé est de 15 % en masse ou plus en une quantité de 0,1 à 15 parties en masse sur la base de 100 parties en masse d'une farine de blé pour l'inhibition du durcissement de pain.

2. Utilisation selon la revendication 1, dans laquelle l'ingrédient actif est une farine de riz dont la teneur en amidon endommagé est supérieure à 30 % en masse.

3. Procédé d'inhibition du durcissement de pain qui incorpore une farine de riz dont la teneur en amidon endommagé est de 15 % en masse ou plus en une quantité de 0,1 à 15 parties en masse sur la base de 100 parties en masse d'une farine de blé, pour l'inhibition du durcissement de pain lors de la production de pain.

4. Procédé de production de pain qui incorpore une farine de riz dont la teneur en amidon endommagé est de 15 % en masse ou plus en une quantité de 0,1 à 15 parties en masse sur la base de 100 parties en masse d'une farine de blé.

5. Mélange de farines pour pain contenant 0,1 à 15 parties en masse d'une farine de riz dont la teneur en amidon endommagé est de 15 % en masse ou plus sur la base de 100 parties en masse d'une farine de blé.

6. Pain dans lequel une farine de riz dont la teneur en amidon endommagé est de 15 % en masse ou plus est présente en une quantité de 0,1 à 15 parties en masse sur la base de 100 parties en masse d'une farine de blé.
